# EUROPEAN PATENT SPECIFICATION

(11) **EP 1 292 046 B1**
(45) Date of publication and mention of the grant of the patent: **19.04.2006**
(21) Application number: 02016776.3
(22) Date of filing: 26.07.2002
(51) Int. Cl.: H04B 7/005, H04Q 7/36

(54) **Method, wireless network system and base station thereof for controlling power and interference**
Verfahren, drahtloses Netzwerksystem und Basisstation für Leistungs- und Störungsregelung
Procédé, système réseau sans fil et station de base pour la commande de la puissance et des interférences

(30) Priority: 26.07.2001 JP 2001226121
(43) Date of publication of application: 12.03.2003
(73) Proprietor: NEC CORPORATION, Tokyo (JP)
(72) Inventor: Ueno, Tsukasa, c/o NEC Corporation, Tokyo (JP)
(74) Representative: Glawe, Delfs, Moll

(56) References cited:
- EP-A- 0 509 850
- WO-A-00/54532
- US-A- 4 435 840
- US-A- 5 499 395

## Description

### Background of the Invention:

This invention relates to a wireless local area network (LAN) adopting CSMA/CA (Carrier Sense Multiple Access with Collision Avoidance), and particularly, relates to connection control for avoiding channel interference between base stations (BS) of a wireless LAN.

A wireless LAN is a LAN in which terminals such as personal computers communicate with base stations by radio signals. A wireless LAN has the advantages over a LAN in which terminals are connected with the LAN by cables.

First, a wireless LAN does not require cables for connecting terminals. Wiring works are unnecessary when the terminals are rearranged. Consequently, a wireless LAN can cut expenses for changing layout in an office.

Next, notebook computers connected via radio waves with a wireless LAN can immediately establish same circumstance anywhere in the service area of the wireless LAN. For example, when a business presentation is held in a reception room and an electronic data file is suddenly needed, if such notebook computer is brought into the room, then the file may be accessed via the wireless LAN without delay. A wireless LAN including notebook computers is available for holding a paperless meeting and for cooperating to discuss and edit same documents with each other. Consequently, notebook computers connected with each other via a wireless LAN can accelerate efficiency, mobility and responsiveness of business.

In a lot of wireless LANs, base stations are added in order to increase wireless terminals accommodated in the LANs or to extend the service areas of the LANs. Furthermore, base stations may be sometimes rearranged in the location in which the wireless LAN is installed. When a base station is added to a wireless LAN, or rearranged in a wireless LAN, interference of radio waves may occur. In order to avoid interference and to maximize a service area of a wireless LAN, the base stations in the wireless LAN has to be adjusted properly. On the other hand, the users of a LAN themselves usually introduce or add a base station to the LAN. Therefore, base stations are hopefully adjusted automatically, without adjustment by the users.

According to conventional techniques for avoiding interference, when interference occurs at one radio channel, then another radio channel is selected for communication. The target of these conventional techniques is however a mobile communication system such as a cellular phone system, which is larger and more complicated than a wireless LAN system. Therefore, circuits used in these techniques usually have too large scale for wireless LAN.

EP-A-0 509 850 discloses a cellular mobile communication system. In order to facilitate communications in a cellular communication system wherein control signal contamination renders communication with the closest cell impossible, the transmission power of the closest cell is reduced to the point where communication between the mobile unit and a cell adjacent the closest one is enabled.

Additionally, wireless LAN systems are required to satisfy specifications almost the same as wired LAN systems do. Such specifications are for example a few hundred kbps to 20 Mbps transmission speed, several ten meters radius transmission range, 8 to 10 bit error rate (BER), and connectability with wired LAN system. A technique for avoiding interference in a wireless LAN is also required to satisfy the specifications. Both expense and technical requirement for installing a wireless LAN are hopefully low.

Related techniques to the present invention are for example disclosed in the following documents; Japanese unexamined patent publications No. H6-140976 (140976/1994), H7-212820 (212820/1995), H10-66140 (66140/1998), H9-200846 (200846/1998), H9-135473 (135473/1997) and 2000-102061 (P2000-102061A).

### Summary of the Invention:

This invention provides a method, a wireless network and a base station of the wireless network for controlling power to send radio waves from a base station of a wireless network. In a wireless network system of the invention, one base station autonomously and individually establishes channel without interference with another base station. The wireless network system of the invention can avoid channel interference between the base stations of the system with simple and easy mechanism.

According to one aspect of this invention, a network system according to claim 1 or 2 is provided. Claim 3 refers to a preferred embodiment.

According to another aspect of this invention, a method of controlling power to send radio waves from a base station for establishing wireless connection between a network and a wireless terminal according to claim 4 or 5 is provided. Claim 6 refers to a preferred embodiment.

Furthermore, according to another aspect of this invention, a base station including a wireless interface circuit for establishing wireless connection with a wireless terminal and wired interface circuit for establishing wired connection with another base station according to claim 7 or 8 is provided. Claim 9 refers to a preferred embodiment.

### Brief Description of the Drawing:

Fig. 1 shows a block diagram for describing a base station of a wireless local area network of the present invention;
Fig. 2 shows service areas 23 and 24 of base stations 21 and 22 when a wall 25 stands between the base stations;
Fig. 3 shows the service areas 23 and 24 when the wall 25 disappears and the base station 22 interferes with the base station 21.
Fig. 4 shows that the base station 22 reduces the service area 24 to a service area 26 in order to stop interference with the base station 21;
Fig 5 shows a process for monitoring traffic from the base station 21 by the base station 22 in response to the reduction of the service area of the base station 22;
Fig. 6 shows that the base station 22 recovers its service area when the base station 22 detects declination of the traffic from the base station 21 by the traffic monitoring process shown in Fig. 5;
Fig. 7 shows that the base station 22 fixes the reduced service area 26 when the base station 22 does not detect the declination for a predetermined time period; and
Fig. 8 shows a flow chart for describing processes that the base station 22 adjusts power to send radio waves in response to interference information sent from the base station 21, which are interfered with the base station 22.

### Description of the Preferred Embodiments:

Description will be made about an embodiment of the present invention. In this embodiment, wireless communication is done through one channel (radio frequency) in one radio cell, and two base stations adjacent to each other use same channel to send radio waves.

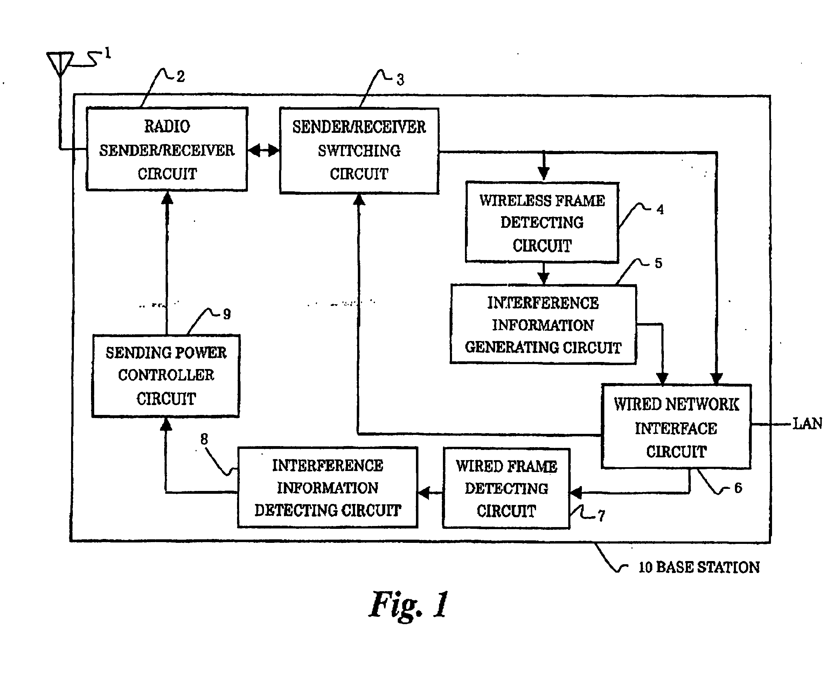

As shown in Fig. 1, a base station 10 includes an antenna 1 and a radio sender/receiver circuit 2 as interface for wireless communication. When the base station 10 receives radio waves, the radio sender/receiver circuit 2 converts the radio waves to base band signals and sends the base band signals to a sender/receiver switching circuit 3. The sender/receiver switching circuit 3 distributes up signals, which are conveyed from wireless terminals or other base stations to the base station 10, to a wireless frame detecting circuit 4 and a wired network interface circuit 6, and on the other hand, distributes down signals, which are conveyed from the base station 10 to wireless terminals, to the sender part of the radio sender/receiver circuit 2. The wired network interface circuit 6 is connected with a local area network (LAN) via a cable in order to communicate with terminals or other base stations via the LAN.

The wireless frame detecting circuit 4 and the wired frame detecting circuit 7 detect frames in base band signals and outputs the frames. The interference information generating circuit 5 judges whether or not the base station 10 is interfered with another base station and outputs interference information if the base station 10 is interfered. The interference information detecting circuit 8 detects a frame containing the interference information and informs the sending power controller circuit 9 of detecting the frame.

When the base station 10 is interfered with another base station, according to frames sent from the wireless frame detecting circuit 5. the interference information generating circuit 5 detects interference and identifies its source base station. Next, the interference information generating circuit 5 generates a frame containing interference information and sends the frame to the source base station via the wired network interface circuit 6 and the LAN.

On the other hand, when the base station 10 interferes with another base station and the other base station sends a frame containing the Interference information to the base station 10 via the LAN, the interference information detecting circuit 8 receives the frame via the wired network interface circuit 6 and the wired frame detecting circuit 7, and detects the interference information contained in the frame. Next, the interference information detecting circuit 8 extracts the interference information and sends it to a sending power controller circuit 9. According to the interference information, the sending power controller circuit 9 instructs the radio sender/receiver circuit 2 to adjust the power to send radio waves in order to avoid interference with the other base station.

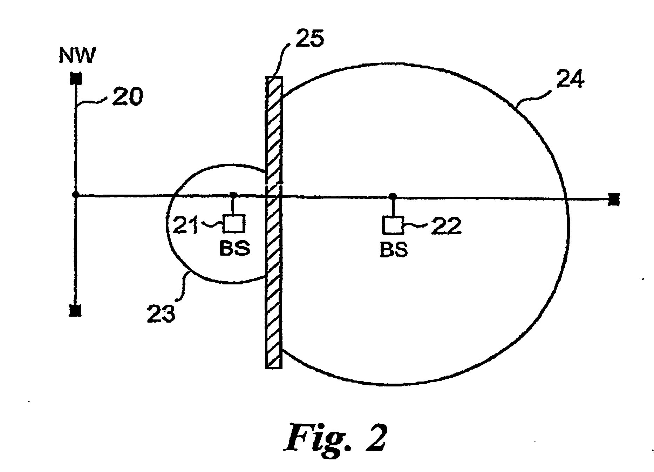

Description will be made about a wireless LAN system including two base stations 21 and 22, each of which corresponds to the base station 10. With reference to Fig. 2, in the wireless LAN system, the base stations 21 and 22 are connected with a network 20. The base station 21 has a service area 23 which expresses one area in which radio waves from the base station 21 can be received. The base station 22 has a service area 24 which expresses another area in which radio waves from the base station 22 can be received. A wall 25 stands between the base stations 21 and 22 and blocks radio waves from both of the stations 21 and 22. In the state shown in Fig. 2, there is no interference between the base stations 21 and 22.

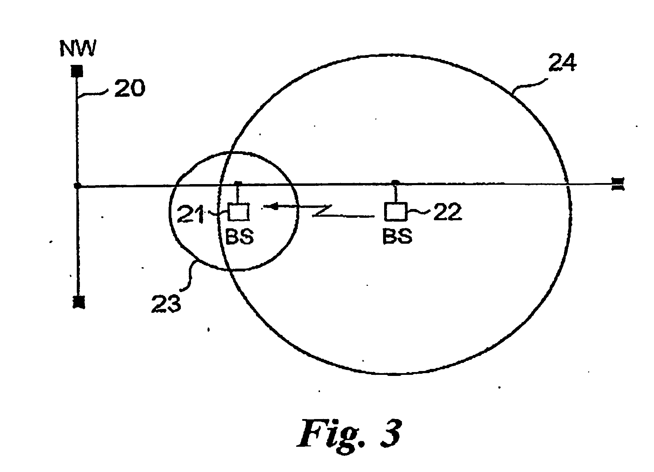

Next, as shown in Fig. 3, the wall 25 has been removed, and as a result, the base station 21 is covered with the service area 24. Consequently, the base station 21 is now interfered with the base station 22. The base station 21 detects the interference and sends an interference information to the base station 22 via the network 20.

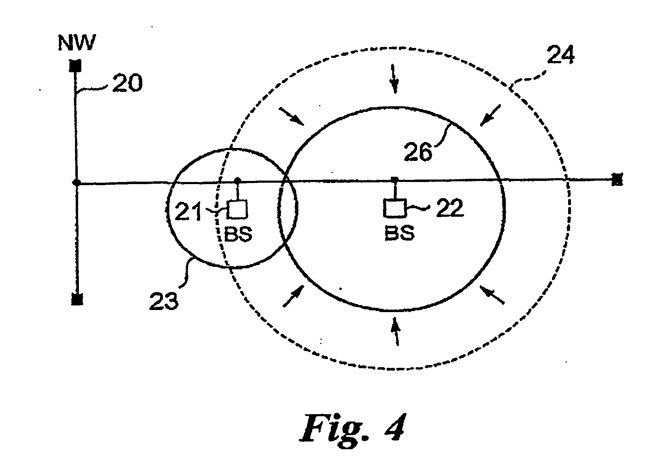

Then, as shown in Fig. 4, the base station 22 receives the interference information from the base station 21 via the network 20. In response to the interference information, the base station 22 reduces the power to send radio waves in order to stop the interference. The service area of the base station 22 is reduced from the service area 24 to a service area 26, which does not cover the base station 21.

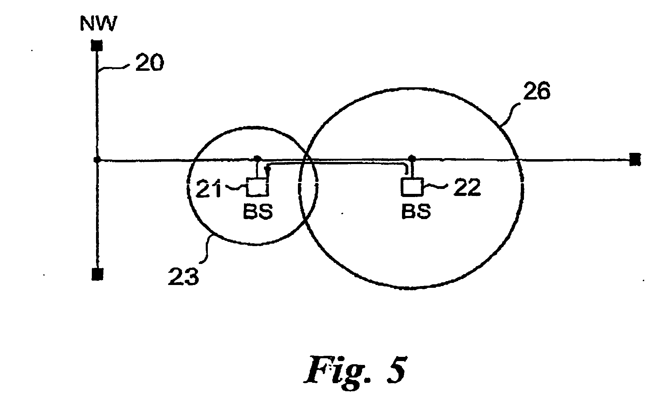

While the service area 24 is reduced to the service area 26, the base station 22 activates a process for monitoring the traffic of the base station 21. As shown in Fig. 5, the base station 22 monitors the traffic of the base station 21 via the network 20. The traffic monitoring process compares the traffic with a predetermined threshold.

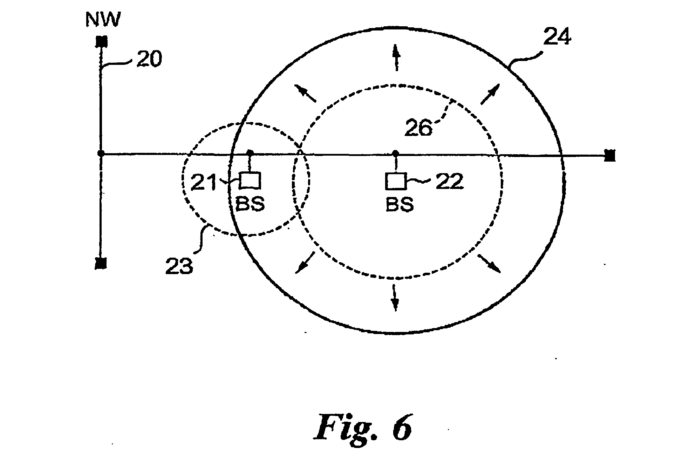

The declination of the traffic means that the base station 21 requires only low bandwidth to establish wireless connections. In this situation, even if the base station 22 interferes with the base station 21, the base station 21 can establish wireless connections. Taking this into consideration, if the traffic becomes under the threshold, then the base station 22 recovers its service area from the service area 26 to the service area 24 as shown in Fig. 6.

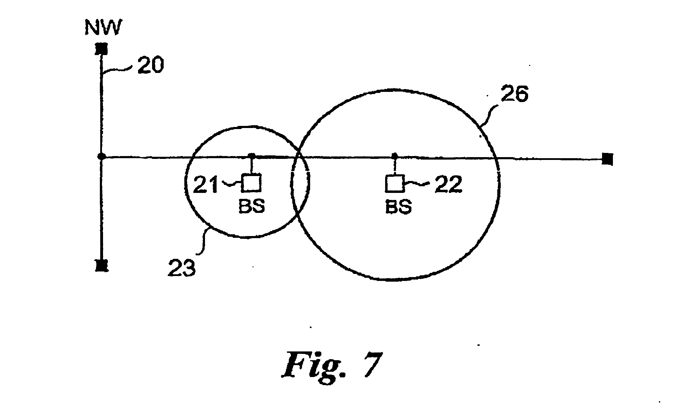

On the other hand, if the traffic is over the threshold after a predetermined time period has passed, then the base station 22 keeps the service area 26 as shown in Fig. 7.

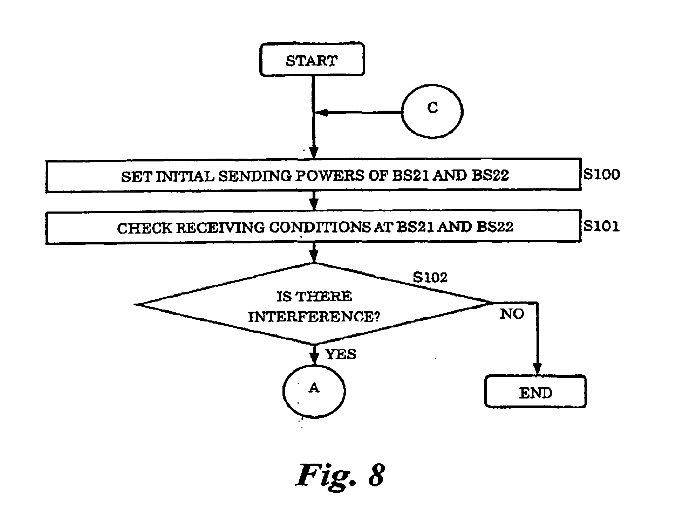

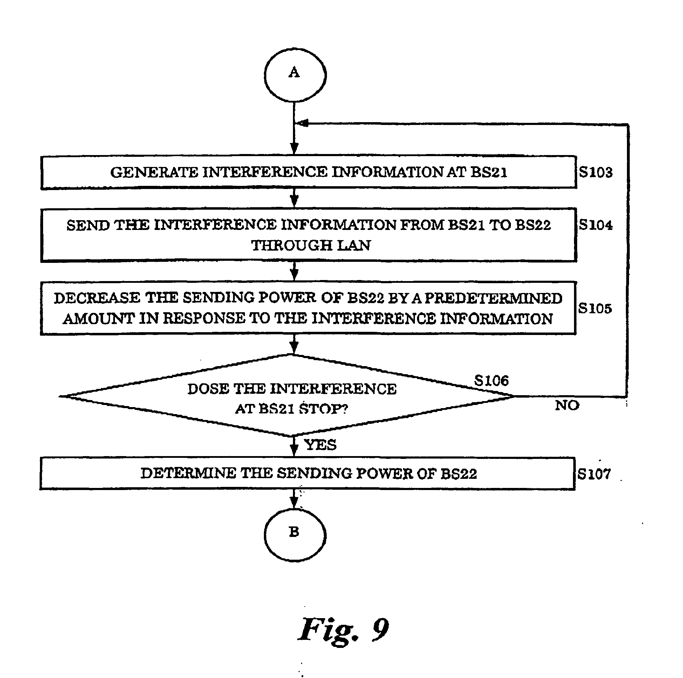

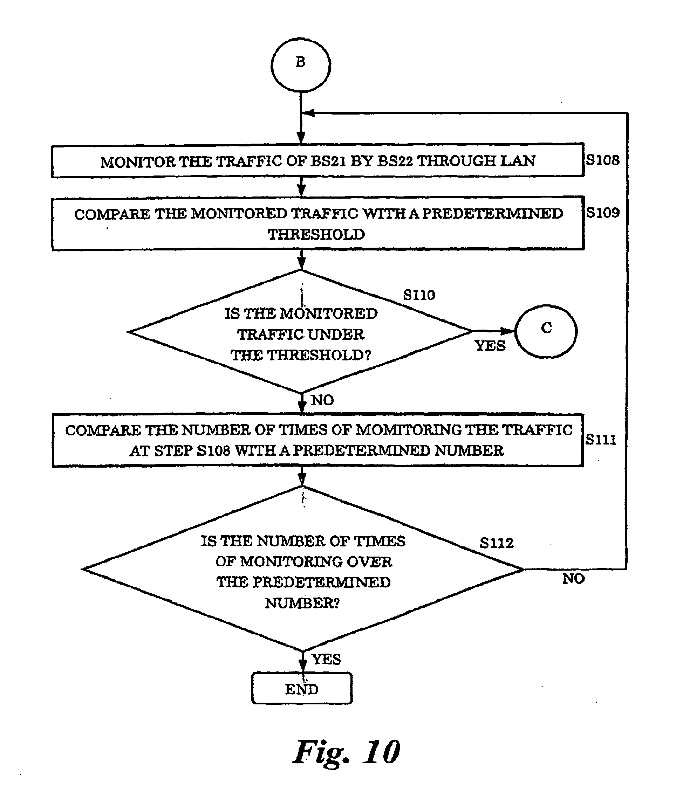

The above-mentioned sending power control process will be described with reference to figures 8, 9 and 10. First, the base stations 21 and 22 initialize powers to send radio waves (STEP 100). Next, the base stations 21 and 22 check whether or not interference occurs (STEPS 101 and 102). If no interference occurs, then the process ends.

The base stations 21 and 22 sense carrier at regular intervals to avoid collision and send beacon frames on radio waves to communicate wireless terminals in their service areas. Furthermore, the base stations 21 and 22 receives radio signals from not only wireless terminals but also other base stations. When the base stations 21 and 22 receives radio waves from other base stations, the base stations 21 and 22 demodulate the radio waves by the sender/receiver switching circuit 3 and filter the demodulated signals by the wireless frame detecting circuit 4 to detect beacon frames from other base stations.

Each of wireless terminals has a MAC (Media Access Control) address which is defined as a unique physical address in the data link layer of the OSI reference model for controlling access to a network device. When this filtering detects an access from a MAC address which is not given to one of the wireless terminals, the filtering judges the access as interference from another base station. Thus interference from another base station is detected at STEPS 101 and 102.

The interference detection is done at both base stations 21 and 22. If both of them do not detect interference from the other base station, it is unnecessary to change the powers to send radio waves of the base stations 21 and 22. Consequently, the wireless LAN ends the sending power control process (STEP 102).

Interference occurs when the surroundings of the wireless LAN or the wireless LAN itself has changed. Now it is assumed that the base station 21 has detected interference from the base station 22. In the base station 21, when the interference information generating circuit 5 detects interference and generates interference information (STEP 103), and sends the interference information via the wired network interface circuit 6 and the wired network 20 to the base station 22 (STEP 104).

In the base station 22, the interference information detecting circuit 8 receives the interference information from the base station 21 via the wired network 20, the wired network interface circuit 6 and the wired frame detecting circuit 7. When the interference information detecting circuit 8 detects the interference Information, the circuit 8 gives a notice to the sending power controller circuit 9. In response to the notice, the sending power controller circuit 9 makes the radio sender/receiver circuit 2 decrease the power to send radio waves by a predetermined amount (STEP 105).

After decreasing the sending power from the base station 22, it is judged whether the interference remains or not (STEP 106).

If the interference remains, then STEPS 103 to 106 are repeated until the service area of the base station 22 is reduced to uncover the base station 21 and the interference information generating circuit 5 stops generating interference information.

If the interference disappears and the interference information detecting circuit 8 has not detected interference information for a predetermined time period, then the sending power from the base station 22 is determined (STEP 107).

At STEP 107, the service area of the base station 22 is reduced from the service area 24 to 26 as shown in Fig. 4. This reduction of the service area may cause disconnection between the wireless LAN system and some of its wireless terminals. In order to cancel the reduction, in the following steps, the base station 22 monitors traffic of the base station 21 via the wired network 22 and judges whether or not the power can be recovered from the reduced power at STEP 107 to the initial power at STEP 100.

First, the base station 22 monitors the traffic of the base station 21 through the LAN (STEP 108), and compares the traffic with a predetermined threshold (STEP 109).

If the traffic becomes under the threshold, then the sending power of the base station 22 is recovered to the initial power (STEP 110).

If the traffic exceeds the threshold, then the comparison between the monitored traffic and the threshold is repeated a predetermined times (STEPS 111 and 112). If the traffic remains exceeding the threshold after finishing the repeat, then the sending power of the base station 22 is fixed at the power determined at STEP 107 and the sending power control process is finished.

As mentioned above, according to the present invention, a base station, which is interfered with another base station, sends interference information to the source base station via a wired network. In response to the interference information, the source base station decreases its power to send radio waves so as to exclude the interfered base station from the service area of the source base station. After that, the source base station monitors traffic of the interfered base station. If the traffic falls short of a threshold, then the source base station recovers its power to the initial one.

Consequently, the present invention can reduce the cost of installing an additional base station in a wireless LAN. No operation is required to users who intend to install a new base station even if channel interference occurs between an existing and a new base stations.

While this invention has thus far been described in conjunction with an embodiment thereof, it will be readily possible for those skilled in the art to put this invention into various other manners.

In the above-mentioned description: the wireless LAN includes two base stations; a wall initially stands between the base stations; and interference between the base stations occurs after the wall is removed. The present invention can however be put into other manners. For example, the number of base station or the reason why interference occurs can be changed in the scope of the present invention. Interference may be caused by installation of an additional base station or other unexpected reason.

Furthermore, in the above-mentioned description, the power to send radio waves is decreased step by step in response to interference information. Instead, the base station may further include circuits for measuring strength of interference. In this case, the interference information generating circuit 5 generates interference information including the strength and the sending power controller circuit 9 controls the power in response to the strength.

## Claims

1. A network system comprising at least two base stations (21, 22) for establishing wireless connection to wireless terminals, the base stations (21, 22) being connected via at least one cable with each other, wherein:
when one of the base stations (21, 22), or an interfered base station (21), detects interference with another one of the base stations (21, 22), or source base station (22), the interfered base station (21) informs the source base station (22) of the occurrence of the interference via the cable;
the source base station (22) controls its power to send radio waves in response to the information;
**characterized in that**
the source base station (22) monitors traffic of the interfered base station (21) via the cable; and
the source base station (22) recovers the power if the traffic falls short of a predetermined threshold.

2. A network system comprising at least two base stations (21, 22) for establishing wireless connection to wireless terminals, the base stations (21, 22) being connected via at least one cable with each other, wherein:
when one of the base stations (21, 22), or an interfered base station (21), detects interference with another one of the base stations (21, 22), or source base station (22), the interfered base station (21) informs the source base station (22) of the occurrence of the interference via the cable;
the source base station (22) controls its power to send radio waves in response to the information;
**characterized in that**
the source base station (22) monitors traffic of the interfered base station (21); and
the source base station (22) fixes the controlled power if the traffic keeps exceeding a predetermined threshold.

3. The network system claimed in claim 1 or 2, wherein the source base station (22) repeatedly decreases the power by a predetermined amount until the interfered base station (21) loses the detection of the interference.

4. A method of controlling power to send radio waves from a base station (21, 22) for establishing wireless connection between a network and a wireless terminal, the network comprising at least two base stations (21, 22), the base stations being connected with each other via at least one cable, wherein:
when one of the base stations (21, 22), or an interfered base station (21) detects interference with another one of the base stations (21, 22), or source base station (22), the interfered base station (21) informs the source base station (22) of the occurrence of the interference via the cable;
the source base station (22) controls its power to send radio waves in response to the information;
**characterized in that**
the source base station (22) monitors traffic of the interfered base station (21) via the cable; and
the source base station (22) recovers the power if the traffic falls short of a predetermined threshold.

5. A method of controlling power to send radio waves from a base station (21, 22) for establishing wireless connection between a network and a wireless terminal, the network comprising at least two base stations (21, 22), the base stations being connected with each other via at least one cable, wherein:
when one of the base stations (21, 22), or an interfered base station (21) detects interference with another one of the base stations (21, 22), or source base station (22), the interfered base station (21) informs the source base station (22) of the occurrence of the interference via the cable;
the source base station (22) controls its power to send radio waves in response to the information;
**characterized in that**
the source base station (22) monitors traffic of the interfered base station (21); and
the source base station (22) fixes the controlled power if the traffic keeps exceeding a predetermined threshold.

6. The method claimed in claim 4 or 5, wherein the source base station (21) repeatedly decreases the power by a predetermined amount until the interfered base station (21) loses the detection of the interference.

7. A base station comprising a wireless interface circuit for establishing wireless connection with a wireless terminal and wired interface circuit for establishing wired connection with another base station, comprising circuits for:
detecting interference with a first base station;
generating interference information for informing the first base station of occurrence of interference to send the interference information to the first base station via the wired interface circuit;
detecting interference information which is generated by a second base station and is received via the wired interface circuit;
controlling power to send radio waves in response to the interference information generated by the second base station,
**characterized by**
further comprising a circuit for monitoring traffic of the second base station via the wired connection, wherein the controlling circuit recovers the power if the traffic falls short of a predetermined threshold.

8. A base station comprising a wireless interface circuit for establishing wireless connection with a wireless terminal and wired interface circuit for establishing wired connection with another base station, comprising circuits for:
detecting interference with a first base station;
generating interference information for informing the first base station of occurrence of interference to send the interference information to the first base station via the wired interface circuit;
detecting interference information which is generated by a second base station and is received via the wired interface circuit;
controlling power to send radio waves in response to the interference information generated by the second base station,
**characterized by**
further comprising a circuit for monitoring traffic of the second base station, wherein the controlling circuit fixes the power if the traffic keeps exceeding a predetermined threshold.

9. The base station claimed in claim 7 or 8, wherein the controlling circuit repeatedly decreases the power by a predetermined amount until no interference information has been received from the second base station for a predetermined time period.

## Revendications

1. Système de réseau comportant au moins deux stations de base (21, 22) pour établir une connexion sans fil à des terminaux sans fil, les stations de base (21, 22) étant connectées les unes aux autres via au moins un câble, dans lequel :
lorsque l'une des stations des base (21, 22), ou une station de base brouillée (21), détecte une interférence avec une autre des stations de base (21, 22), ou la station de base source (22), la station de base brouillée (21) informe la station de base source (22) de l'apparition de l'interférence via le câble,
la station de base source (22) commande sa puissance pour envoyer des ondes radio en réponse aux informations,
**caractérisé en ce que**
la station de base source (22) contrôle le trafic de la station de base brouillée (21) via le câble, et
la station de base source (22) rétablit la puissance si le trafic chute en dessous d'un seuil prédéterminé.

2. Système de réseau comportant au moins deux stations de base (21, 22) pour établir une connexion sans fil à des terminaux sans fil, les stations de base (21, 22) étant connectées les unes aux autres via au moins un câble, dans lequel :
lorsque l'une des stations de base (21, 22), ou une station de base brouillée (21), détecte une interférence avec une autre des stations de base (21, 22), ou la station de base source (22), la station de base brouillée (21) informe la station de base source (22) de l'apparition de l'interférence via le câble,
la station de base source (22) commande sa puissance pour envoyer des ondes radio en réponse aux informations,
**caractérisé en ce que**
la station de base source (22) contrôle le trafic de la station de base brouillée (21), et
la station de base source (22) fixe la puissance commandée si le trafic continue à dépasser un seuil prédéterminé.

3. Système de réseau selon la revendication 1 ou 2, dans lequel la station de base source (22) réduit de manière répétée la puissance d'une quantité prédéterminée jusqu'à ce que la station de base brouillée (21) perde la détection de l'interférence.

4. Procédé de commande de puissance pour envoyer des ondes radio d'une station de base (21, 22) pour établir une connexion sans fil entre un réseau et un terminal sans fil, le réseau comportant au moins deux stations de base (21, 22), les stations de base étant connectées les unes aux autres via au moins un câble, dans lequel :
lorsque l'une des stations de base (21, 22), ou une station de base brouillée (21) détecte une interférence avec une autre des stations de base (21, 22), ou la station de base source (22), la station de base brouillée (21) informe la station de base source (22) de l'apparition de l'interférence via le câble,
la station de base source (22) commande sa puissance pour envoyer des ondes radio en réponse aux informations,
**caractérisé en ce que**
la station de base source (22) contrôle le trafic de la station de base brouillée (21) via le câble, et
la station de base source (22) rétablit la puissance si le trafic chute en dessous d'un seuil prédéterminé.

5. Procédé de commande d'énergie pour envoyer des ondes radio d'une station de base (21, 22) pour établir une connexion sans fil entre un réseau et un terminal sans fil, le réseau comportant au moins deux stations de base (21, 22), le stations de base étant connectées les unes aux autres via au moins un câble, dans lequel :
lorsque l'une des stations de base (21, 22), ou une station de base brouillée (21) détecte une interférence avec une autre des stations de base (21, 22), ou la station de base source (22), la station de base brouillée (21) informe la station de base source (22) de l'apparition de l'interférence via le câble,
la station de base source (22) commande sa puissance pour envoyer des ondes radio en réponse aux informations,
**caractérisé en ce que**
la station de base source (22) contrôle le trafic de la station de base brouillée (21), et
la station de base source (22) fixe la puissance commandée si le trafic continue à dépasser un seuil prédéterminé.

6. Procédé selon la revendication 4 ou 5, dans lequel la station de base source (21) réduit de manière répétée l'énergie d'une quantité prédéterminée jusqu'à ce que la station de base brouillée (21) perde la détection de l'interférence.

7. Station de base comportant un circuit d'interface sans fil pour établir une connexion sans fil avec un terminal sans fil et un circuit d'interface câblé pour établir une connexion câblée avec une autre station de base, comportant des circuits pour :
détecter une interférence avec une première station de base,
générer des informations d'interférence pour informer la première station de base de l'apparition d'interférence pour envoyer les informations d'interférence à la première station de base via le circuit d'interface câblé,
détecter des informations d'interférence qui sont générées par une seconde station de base et sont reçues via le circuit d'interface câblé,
commander la puissance pour envoyer des ondes radio en réponse aux informations d'interférence générées par la seconde station de base,
**caractérisée en ce que**
elle comporte de plus un circuit pour contrôler le trafic de la seconde station de base via la connexion câblée, le circuit de commande rétablissant la puissance si le trafic chute en dessous d'un seuil prédéterminé.

8. Station de base comportant un circuit d'interface sans fil pour établir une connexion sans fil avec un terminal sans fil et un circuit d'interface câblé pour établir une connexion câblée avec une autre station de base, comportant des circuits pour :
détecter une interférence avec une première station de base,
générer des informations d'interférence pour informer la première station de base de l'apparition d'interférence pour envoyer les informations d'interférence à la première station de base via le circuit d'interface câblé,
détecter des informations d'interférence qui sont générées par une seconde station de base et sont reçues via le circuit d'interface câblé,
commander la puissance pour envoyer des ondes radio en réponse aux informations d'interférence générées par la seconde station de base,
**caractérisée en ce que**
elle comporte de plus un circuit pour contrôler le trafic de la seconde station de base, le circuit de commande fixant la puissance si le trafic continue à dépasser un seuil prédéterminé.

9. Station de base selon la revendication 7 ou 8, dans laquelle le circuit de commande réduit de manière répétée la puissance d'une quantité prédéterminée jusqu'à ce qu'aucune information d'interférence ne soit reçue depuis la seconde station de base pendant une période de temps prédéterminée.

## Patentansprüche

1. Ein Netzwerksystem, das mindestens zwei Basisstationen (21, 22) zum Herstellen einer drahtlosen Verbindung zu drahtlosen Endgeräten umfasst, wobei die Basisstationen (21, 22) mittels mindestens eines Kabels miteinander verbunden sind, wobei:
wenn eine der Basisstationen (21, 22) oder eine gestörte Basisstation (21) eine Interferenz mit einer weiteren der Basisstationen (21, 22) oder der Ursprungsbasisstation (22) erfasst, die gestörte Basisstation (21) die Ursprungsbasisstation (22) mittels des Kabels über das Auftreten der Interferenz informiert;
die Ursprungsbasisstation (22) ihre Leistung zum Senden von Radiowellen als Reaktion auf die Information steuert,
**dadurch gekennzeichnet, dass**
die Ursprungsbasisstation (22) Verkehr der gestörten Basisstation (21) mittels des Kabels überwacht; und
die Ursprungsbasisstation (22) die Leistung wiederherstellt, wenn der Verkehr eine vorgegebene Schwelle unterschreitet.

2. Netzwerksystem, das mindestens zwei Basisstationen (21, 22) zum Herstellen einer drahtlosen Verbindung zu drahtlosen Endgeräten umfasst, wobei die Basisstationen (21, 22) mittels mindestens eines Kabels miteinander verbunden sind, wobei:
wenn eine der Basisstationen (21, 22) oder eine gestörte Basisstation (21) eine Interferenz mit einer weiteren der Basisstationen (21, 22) oder der Ursprungsbasisstation (22) erfasst, die gestörte Basisstation (21) die Ursprungsbasisstation (22) mittels des Kabels über das Auftreten der Interferenz informiert;
die Ursprungsbasisstation (22) ihre Leistung zum Senden von Radiowellen als Reaktion auf die Information steuert,
**dadurch gekennzeichnet, dass**
die Ursprungsbasisstation (22) Verkehr der gestörten Basisstation (21) überwacht; und
die Ursprungsbasisstation (22) die gesteuerte Leistung festsetzt, wenn der Verkehr weiterhin eine vorgegebene Schwelle überschreitet.

3. Netzwerksystem gemäß Anspruch 1 oder 2, wobei die Ursprungsbasisstation (22) wiederholt die Leistung um einen vorgegebenen Betrag verringert, bis die gestörte Basisstation (21) die Erfassung der Interferenz verliert.

4. Verfahren zur Steuerung der Leistung zum Senden von Radiowellen von einer Basisstation (21, 22) zum Herstellen einer drahtlosen Verbindung zwischen einem Netzwerk und einem drahtlosen Endgerät, wobei das Netzwerk mindestens zwei Basisstationen (21, 22) umfasst, wobei die Basisstationen mittels mindestens eines Kabels miteinander verbunden sind, wobei:
wenn eine der Basisstationen (21, 22) oder eine gestörte Basisstation (21) Interferenz mit einer weiteren der Basisstationen (21, 22) oder der Ursprungsbasisstation (22) erfasst, die gestörte Basisstation (21) die Ursprungsbasisstation (22) mittels des Kabels über das Auftreten der Interferenz informiert;
die Ursprungsbasisstation (22) ihre Leistung zum Senden von Radiowellen als Reaktion auf die Information steuert;
**dadurch gekennzeichnet, dass**
die Ursprungsbasisstation (22) Verkehr der gestörten Basisstation (21) mittels des Kabels überwacht; und
die Ursprungsbasisstation (22) die Leistung wiederherstellt, wenn der Verkehr eine vorgegebene Schwelle unterschreitet.

5. Verfahren zur Steuerung der Leistung zum Senden von Radiowellen von einer Basisstation (21, 22) zum Herstellen einer drahtlosen Verbindung zwischen einem Netzwerk und einem drahtlosen Endgerät, wobei das Netzwerk mindestens zwei Basisstationen (21, 22) umfasst, wobei die Basisstationen mittels mindestens eines Kabels miteinander verbunden sind, wobei:
wenn eine der Basisstationen (21, 22) oder eine gestörte Basisstation (21) Interferenz mit einer weiteren der Basisstationen (21, 22) oder der Ursprungsstation (22) erfasst, die gestörte Basisstation (21) die Ursprungsbasisstation (22) mittels des Kabels über das Auftreten der Interferenz informiert;
die Ursprungsbasisstation (22) ihre Leistung zum Senden von Radiowellen als Reaktion auf die Information steuert;
**dadurch gekennzeichnet, dass**
die Ursprungsbasisstation (22) Verkehr der gestörten Basisstation (21) überwacht; und
die Ursprungsbasisstation (22) die gesteuerte Leistung festsetzt, wenn der Verkehr weiter eine vorgegebene Schwelle überschreitet.

6. Verfahren gemäß Anspruch 4 oder 5, wobei die Ursprungsbasisstation (21) wiederholt die Leistung um einen vorgegebenen Betrag verringert, bis die gestörte Basisstation (21) die Erfassung der Interferenz verliert.

7. Basisstation, die eine drahtlose Schnittstellenschaltung zum Herstellen einer drahtlosen Verbindung mit einem drahtlosen Endgerät und eine Kabelschnittstellenschaltung zum Herstellen einer Kabelverbindung mit einer weiteren Basisstation umfasst und Schaltungen umfasst zum:
Erfassen von Interferenz mit einer ersten Basisstation;
Erzeugen von Interferenzinformationen zum Informieren der ersten Basisstation über das Auftreten von Interferenz zum Senden der Interferenzinformation an die erste Basisstation mittels der Kabelschnittstellenschaltung;
Erfassen von Interferenzinformationenen, die durch eine zweite Basisstation erzeugt werden und mittels der Kabelschnittstellenschaltung empfangen werden;
Steuern der Leistung zum Senden von Radiowellen als Reaktion auf die Interferenzinformationen, die von der zweiten Basisstation erzeugt werden,
**gekennzeichnet durch**
zusätzliches Umfassen einer Schaltung zum Überwachen von Verkehr der zweiten Basisstation mittels der Kabelverbindung, wobei die Steuerungsschaltung die Leistung wiederherstellt, falls der Verkehr eine vorgegebene Schwelle unterschreitet.

8. Basisstation, die eine drahtlose Schnittstellenschaltung zum Herstellen einer drahtlosen Verbindung mit einem drahtlosen Endgerät und eine Kabelschnittstellenschaltung zum Herstellen einer Kabelverbindung mit einer weiteren Basisstation umfasst und Schaltungen umfasst zum:
Erfassen von Interferenz mit einer ersten Basisstation;
Erzeugen von Interferenzinformationen zum Informieren der ersten Basisstation über das Auftreten von Interferenz zum Senden der Interferenzinformationen zu der ersten Basisstation mittels der Kabelschnittstellenschaltung;
Erfassen von Interferenzinformationen, die durch eine zweite Basisstation erzeugt werden und mittels der Kabelschnittstellenschaltung empfangen werden;
Steuern der Leistung zum Senden von Radiowellen als Reaktion auf die Interferenzinformationen, die durch die zweite Basisstation erzeugt werden,
**gekennzeichnet durch**
zusätzliches Umfassen einer Schaltung zum Erfassen von Verkehr der zweiten Basisstation, wobei die Steuerungsschaltung die Leistung festsetzt, wenn der Verkehr weiter eine vorgegebene Schwelle überschreitet.

9. Basisstation gemäß Anspruch 7 oder 8, wobei die Steuerungsschaltung wiederholt die Leistung um einen vorgegebenen Betrag verringert, bis für einen vorgegebenen Zeitraum keine Interferenzinformation mehr von der zweiten Basisstation empfangen worden ist.
